# EUROPEAN PATENT APPLICATION

(11) **EP 2 741 459 A1**
(43) Date of publication of application: **11.06.2014**
(21) Application number: 12195515.7
(22) Date of filing: 04.12.2012
(51) Int. Cl.: H04L 29/06, H04W 12/06, H04W 84/04, H04W 88/04, H04W 92/18

(54) **Method and device for allowing a user equipment without sim card to take advantage of a mobile data subscription of its user to access a wireless network**

(71) Applicant: Alcatel Lucent, 75007 Paris (FR)
(72) Inventor: El Mghazli, Yacine, 91620 Nozay (FR); Orlandi, Barbara, 91620 Nozay (FR)
(74) Representative: Camus, Olivier Jean-Claude

(57) **Abstract**

A method is intended for allowing an equipment (E1) comprising a wireless communication module (CNM) and belonging to a user to access a wireless network (MN) to which a SIM-equipped device (MT) of this user has access thanks to a mobile data subscription, and comprises:
- a step (i) during which one establishes a connection between the SIM-equipped device (MT) and the wireless network (MN) to get credentials intended for attaching the equipment (E1) to the wireless network (MN), and
- a step (ii) during which one provides these credentials to the equipment (E1) so that it uses these credentials to attach to the wireless network (MN) and then to access said wireless network (MN).

## Description

### Technical field

The present invention relates to the access of equipments, lacking of SIM card (or any equivalent means), to a wireless network.

One means here by "equipment" any electronic equipment implementing at least one application and comprising a user interface and a wireless communication module capable of establishing wireless communications with a wireless network autonomously without any SIM card (or any equivalent means).

### Background of the invention

Computers, laptops, telephones (and notably smartphones), and tablet-Pcs are no more the only equipments capable of accessing to a packet data network (like the Internet) to exchange data with other communication equipments. Indeed, an increasing number of equipments of other types and having a wireless communication capability could also potentially access to a packet data network. This is notably the case of cameras, digital music and/or video players, health monitoring devices, sensors, alarm systems or power managing systems, for instance. But these equipments lack of SIM cards (or any equivalent means) and may also lack of means for provisioning Wi-Fi credentials easily. Thus their connectivity would be limited to free and open Wi-Fi hotspots which are unsecure. Unfortunately the number of free and open Wi-Fi access points is very low and users do not have permanently a connection cable and/or a communication equipment with them.

Of course it could be possible to equip the above mentioned equipments with a SIM card. But this would notably increase the number of entries in the home location register (or HLR) of the mobile network operators (or MNOs), and this would also increase the price of these equipments. More, receiving a new SIM card generally takes several days, which prevents a newly bought equipment to access immediately to a packet data network. Finally, this solution does not appear to be economically viable in the case of sporadic data accesses.

An equipment with a Wi-Fi module could also access to a Wi-Fi network with a charge of admission. But this requires its user to provide it with credentials which may be a painstaking process, especially when it does not have a keyboard.

Finally, it could be possible to take advantage of the new eUICC technology that allows, provided a valid architecture, to remotely personalize a SIM card (called an eUICC card). Unfortunately the eUICC technology will not be available before several years, notably because it requires a lot of international agreements between operators to work correctly.

### Summary of the invention

So, an objective of the invention is to improve the situation, and notably to allow a user having a mobile data subscription to link to that subscription any equipment purchased to allow it to access a wireless network without having a SIM card.

To this effect the invention notably provides a method, intended for allowing an equipment comprising a wireless communication module and belonging to a user to access a wireless network to which a SIM-equipped device of this user has access thanks to a mobile data subscription, and comprising:
- a step (i) during which one establishes a connection between the SIM-equipped device and the wireless network to get credentials intended for attaching the equipment to the wireless network, and
- a step (ii) during which one provides these credentials to the equipment so that it uses these credentials to attach to the wireless network and then to access the wireless network.

The method according to the invention may include additional characteristics considered separately or combined, and notably:
- in a first embodiment, during step (i) one may also establish a connection between the SIM-equipped device and the equipment, then the SIM-equipped device may use a software application, intended for acting as a gateway between the wireless network and the equipment. In this case during step (ii) the wireless network may provide the equipment with the credentials through the SIM-equipped device and under control of the software application;
   ➢ in step (i) the wireless network may provide the SIM-equipped device with the software application through the connection established between the SIM-equipped device and the wireless network;
   ➢ in a variant, during step (i) the SIM-equipped device may access to a server storing the software application in order to use the latter through the connection established between the SIM-equipped device and the wireless network;
- in a second embodiment, during step (i), once the connection has been established between the SIM-equipped device and the wireless network, the user may provide information representative of his equipment to a dedicated service of the wireless network, then the dedicated service may provide the credentials to the SIM-equipped device. In this case during step (ii) the user may provide the received credentials to his equipment;
   ➢ in step (i) the user may also provide information representative of an allowed network use for his equipment;
   ➢ in step (i) the user may also request to be notified of his equipment consumption onto his SIM-equipped device;
   ➢ in step (ii) the user may provide the received credentials to his equipment by means of a user interface of this equipment. In a variant, during step (ii) the user may establish a connection between his SIM-equipped device and his equipment, and then may provide the received credentials to his equipment by means of his SIM-equipped device and through this connection;
   ➢ in step (ii), once the equipment has been attached to the wireless network, the latter may transmit a message describing this attachment to the SIM-equipped device so that its user checks if this attachment is correct and in the affirmative uses his SIM-equipped device to transmit a response to the wireless network to allow his attached equipment to access the wireless network. In a variant, during step (ii), once the equipment has been attached to the wireless network, the latter may transmit a message to the SIM-equipped device to confirm that this attachment has been successfully carried out;
- the credentials may comprise data chosen in a group comprising at least SIM/AKA keys, an EAP-TLS certificate, a X509 certificate, a Wi-Fi WEP, and WPA/WPA2 keys.

The invention also provides a device, intended for allowing an equipment comprising a wireless communication module and belonging to a user to access a wireless network to which a SIM-equipped device of this user has access thanks to a mobile data subscription, and comprising a control means arranged, when a connection has been established between the SIM-equipped device and a chosen server of the wireless network, for delivering credentials intended for attaching the equipment to the wireless network and for ordering this chosen server to transmit these credentials to the SIM-equipped device, so that they could be used by the equipment to attach to the wireless network and then to access the wireless network.

The device according to the invention may include additional characteristics considered separately or combined, and notably:
- in a first embodiment, its control means may be arranged for allowing the SIM-equipped device to access a software application, intended for acting as a gateway between the wireless network and the equipment after it has been connected to the SIM-equipped device, through the connection established between the SIM-equipped device and the server, and then for providing the equipment with the credentials through the SIM-equipped device and under control of the software application;
- in a second embodiment, its control means may be arranged for delivering the credentials after the server has received information representative of the equipment from the SIM-equipped device, in order they could be transmitted to the SIM-equipped device by the server, and then provided to the equipment by his user.

The invention also provides a (service) server intended for equipping a wireless network and comprising a device such as the one above introduced. Such a server may be a dedicated one or an ANDSF server, for instance.

### Brief description of the figures

Other features and advantages of the invention will become apparent on examining the detailed specifications hereafter and the appended drawings, wherein:

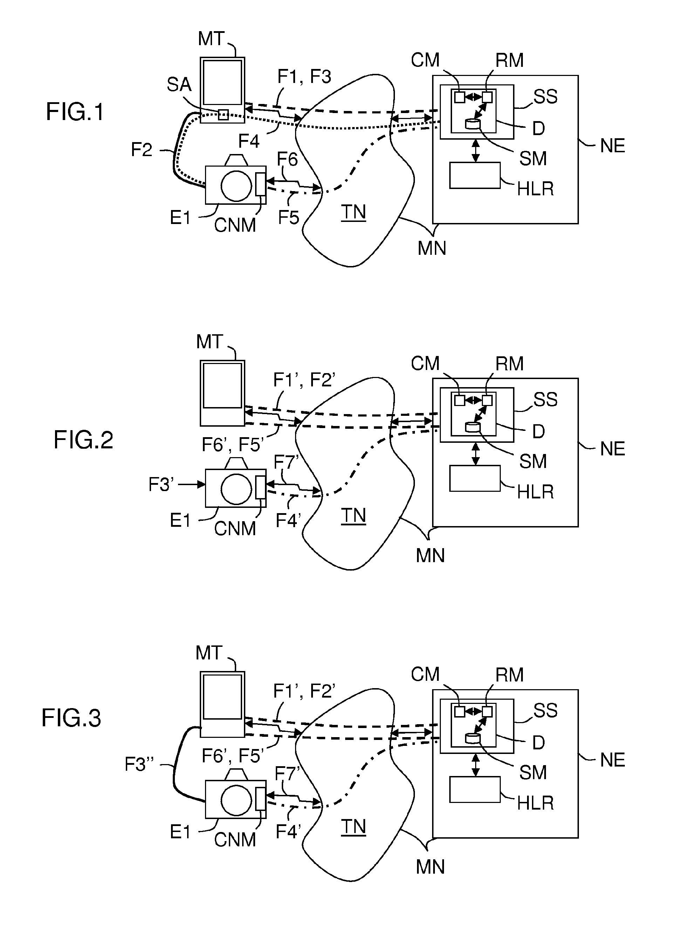

- figure 1 schematically and functionally illustrates a mobile network comprising a service server equipped with a device according to the invention and to which a mobile telephone of a user is initially connected, then, later on, a camera of this user is connected after a first implementation of a method according to the invention,
- figure 2 schematically and functionally illustrates a mobile network comprising a service server equipped with a device according to the invention and to which a mobile telephone of a user is initially connected, then, later on, a camera of this user is connected after a second implementation of the method according to the invention, and
- figure 3 schematically and functionally illustrates a mobile network comprising a service server equipped with a device according to the invention and to which a mobile telephone of a user is initially connected, then, later on, a camera of this user is connected after a third implementation of the method according to the invention.

### Detailed description of the preferred embodiment

The appended drawings may serve not only to complete the invention, but also to contribute to its understanding, if need be.

The invention aims, notably, at offering a method, and an associated device D, intended for allowing an equipment Ei comprising a wireless communication module CNM and belonging to a user to access a wireless network MN to which a SIM-equipped device MT of this user has access thanks to a mobile data subscription.

In the following description it will be considered that the user SIM-equipped device MT is a mobile telephone (such as a smartphone). But the user SIM-equipped device MT could be any type of communication equipment having a broadband mobile data access function and comprising a SIM card (or any equivalent means) associated to a mobile data subscription to a wireless network operator using a wireless network MN. For instance, the user SIM-equipped device MT could be an USB data card/dongle with a SIM card that can be connected to a user computer.

Moreover, in the following description it will be considered that the wireless network MN is a mobile (or cellular) network that is used by a mobile network operator (or MNO). But it could be also a Wi-Fi network that is part of a mobile network or is an independent network, for instance.

As illustrated in figures 1 to 3 a mobile network MN can be seen as a transport network TN coupled to a group NE of network equipments, and notably to a home location register (or HLR).

It is recalled that a home location register HLR is a central database of a mobile network MN that contains information relative to each user of a mobile terminal having a mobile data subscription authorizing an access to this mobile network MN. So, it stores notably information stored into the SIM cards issued by the mobile network operator. Amongst this stored information one may notably mention the IMSI identifier of the SIM card, a primary MSISDN, which is the telephone number used by a mobile telephone MT when initiating and receiving voice calls and SMS, a possible secondary MSISDN, which is another telephone number used for fax and data calls, services requested or given to a user (or subscriber), network settings allowing a user (or subscriber) to access packet services, and the current location of a user (or subscriber).

The transport network TN can be a combination of a wireless infrastructure (notably for the access part) and a wired infrastructure.

In the non-limiting example illustrated in figures 1 to 3, the user of the mobile telephone MT also comprises one equipment E1 (i = 1) having a wireless communication module CNM but no SIM card. But he could have several equipments Ei, possibly of different types.

For instance, this wireless communication module CNM is a Wi-Fi communication module. But it could be also a WiMAX communication module or a cellular (or mobile) network communication module.

In the following description it will be considered that the equipment E1 is a camera. But this equipment E1 could be also a digital music and/or video player, a health monitoring device, a sensor, an alarm system or a power managing system, for instance.

The method, according to the invention, comprises at least two steps (i) and (ii), which may be partially implemented by a service server SS comprising a device D and belonging to the group NE of network equipments of the mobile network MN, as illustrated in figures 1 to 3.

In the first step (i), one (the user) establishes a connection between the mobile telephone MT and the mobile network MN (line F1 or F1'). This connection is intended for getting credentials, that are intended for attaching the equipment E1 to the mobile network MN, and possibly for registering the equipment E1 near the service server SS to allow it to access the mobile network MN based on the user's subscription and possibly under certain conditions (as will be explained below).

This step (i) can be partly implemented by the device D. To this effect, the device D comprises a control means CM arranged, when a connection has been established between the mobile telephone MT and its service server SS (line F1 or F1'), for delivering credentials intended for attaching the equipment E1 to the mobile network MN and for ordering its service server SS to transmit these credentials to the mobile telephone MT (line F3 or F2').

The service server SS could be a dedicated one or an ANDSF server well known from the man skilled in the art. In the last hypothesis, the mobile telephone MT may provide the ANDSF service server SS with information relative to the equipment E1 (such as a type, a serial number, authorization(s)), and the ANDSF service server SS sends back to the mobile telephone MT a list of wireless networks to which said equipment E1 is authorized to attach (and access), and the corresponding attachment keys. This would require an adaptation of the protocol defined in TS 24.312.

The delivered credentials could be of any type from the moment that they allow an equipment Ei to attach to the considered wireless network in order to access it. So, they may comprise data chosen in a group comprising at least SIM/AKA keys, an EAP-TLS certificate, a X509 certificate, login and password information, a Wi-Fi WEP, or WPA or WPA2 keys.

In the second step (ii) of the method, one provides the credentials to the equipment E1 so that it uses these credentials to attach to the mobile network MN and then to access the mobile network MN (at any time after having been attached).

Several embodiments of steps (i) and (ii) can be envisaged.

A first example of embodiment is illustrated in figure 1. In this first example, during step (i) one (the user) also establishes a connection between the mobile telephone MT and the equipment E1 (line F2), then the mobile telephone MT uses a software application (possibly signed and/or certified) that is intended for acting as a gateway between the mobile network MN and the equipment E1.

This last connection (line F2) can be of a wired type (for instance through an USB cable) or of a wireless type (for instance Wi-Fi or Bluetooth).

For instance, and as illustrated in figure 1, the mobile network MN (and more precisely the service server SS on request of the control means CM) may provide the mobile telephone MT with the software application, through the (secured) connection that has been established between the mobile telephone MT and the mobile network MN (line F3).

But, in a variant, the mobile telephone MT could access to a server of the group NE of network equipments that stores this software application, in order to use the latter through the connection that has been established between the mobile telephone MT and the mobile network MN. So in this case the software application is centralized, but not distributed in the mobile telephones MT. Such a server could be the service server SS, for instance.

In this first example, during step (ii) the mobile network MN provides the equipment E1 with the credentials through the mobile telephone MT and the connection (line F2), and under control of the software application acting as a gateway (line F4).

Once the equipment E1 has been configured with the transmitted credentials, it is capable to attach to the mobile network MN without any intervention of the mobile telephone (line F5). This attachment can be carried normally by the mobile network MN on request of the equipment E1.

Then, any time after having been attached the equipment E1 is capable of initiating a wireless communication with the mobile network MN (line F6) by using the received credentials, for instance for sharing pictures and/or videos or for transmitting pictures to be printed to an internet service or else for receiving data (such as software upgrades for instance).

A second example of embodiment is illustrated in figure 2. In this second example, during step (i), once the connection has been established between the mobile telephone MT and the mobile network MN (line F1'), the user provides information representative of his equipment E1 to a dedicated service of the mobile network MN (line F1'), then this dedicated service provides the credentials (delivered by the control means CM) to the mobile telephone MT (line F2').

This dedicated service is preferably offered by the service server SS and more precisely by the device D. To this effect, the device D may comprise a registration means RM coupled to its control means CM and arranged for registering the received information, representative of the equipment E1, into a storing means (for instance a database which is similar to the home location register HLR, but only concerns the registered equipments Ei of the users (or subscribers) whose main information is stored into the HLR).

The provided information may comprise data defining an equipment name or identifier and/or an equipment type and/or an equipment serial number and/or an equipment MAC address.

It is important to note that the user may also provide information representative of the network use that is allowed for his equipment E1. Such an information may be a limitation in size of transfer (uplink and/or downlink) per month or week or day and/or an URL, a domain name or a social media account designating a service to which said equipment E1 is authorized to access, or a limitation in data rates, for instance. The user may also request to be notified of his equipment consumption onto his mobile telephone MT.

In this second example, during step (ii) the user provides the received credentials to his equipment E1 (arrow F3'). To this effect the user provides the credentials (received by his mobile telephone MT) to his equipment E1, by means of a user interface of this equipment E1 (arrow F3').

Once the equipment E1 has been configured with the transmitted credentials, it is capable to attach to the mobile network MN without intervention of the mobile telephone (line F4'). As mentioned before, this attachment can be carried out normally by the mobile network MN on request of the equipment E1.

Then, any time after having been attached the equipment E1 is capable to initiate a wireless communication with the mobile network MN (line F7') by using the received credentials.

A third example of embodiment is illustrated in figure 3. Step (i) of this third example is identical to step (i) of the second example. The main difference between the second and third examples is the implementation of step (ii). Indeed, in the third example the user provides the received credentials to his equipment E1 through a connection he has previously established between his mobile telephone MT and his equipment E1 (line F3"). So, he provides the received credentials to his equipment E1 by means of his mobile telephone MT and through the last connection (line F3").

This last connection can be of a wired type (for instance through an USB cable) or of a wireless type (for instance Wi-Fi or Bluetooth).

Once the equipment E1 has been configured with the transmitted credentials, it is capable to attach to the mobile network MN without intervention of the mobile telephone (line F4'). As mentioned before, this attachment can be carried out normally by the mobile network MN on request of the equipment E1.

Then, any time after having been attached the equipment E1 is capable to initiate a wireless communication with the mobile network MN (line F7') by using the received credentials.

In the second and third embodiments, just after the equipment E1 has been attached, the mobile network MN (and more precisely the service server SS on request of the control means CM of the device D) may transmit a message, describing the new attachment of the equipment E1, to the mobile telephone MT (line F5'), before this equipment E1 may access to the mobile network MN. This message is intended for allowing the user to check if the new attachment is correct, then, in the affirmative, to use his mobile telephone MT to transmit a response to the mobile network MN (and more precisely to the device D) (line F6') to confirm that his equipment E1 is allowed to access the mobile network MN.

In a variant, once the equipment E1 has been attached to the mobile network MN, the latter (MN) may just transmit a message to the mobile telephone MT to confirm that this attachment has been successfully carried out.

It is important to note that the device D can be made of software modules (or a computer program product). But it may be also made of a combination of software modules and electronic circuit(s) or hardware modules.

This invention offers several advantages, and notably:
- it is very simple to implement,
- it allows a seamless network access for a large variety of equipments (or devices) of a user, using only the mobile subscription of this user,
- it allows an attached equipment to access at any time a wireless network even when its user doesn't carry his SIM-equipped device with him.

The invention is not limited to the embodiments of method, device and service server described above, only as examples, but it encompasses all alternative embodiments which may be considered by one skilled in the art within the scope of the claims hereafter.

## Claims

1. Method for allowing an equipment (Ei) comprising a wireless communication module (CNM) and belonging to a user to access a wireless network (MN) to which a SIM-equipped device (MT) of said user has access thanks to a mobile data subscription, said method comprising:
- a step (i) during which one establishes a connection between said SIM-equipped device (MT) and said wireless network (MN) to get credentials intended for attaching said equipment (Ei) to said wireless network (MN), and
- a step (ii) during which one provides said credentials to said equipment (Ei) so that it uses these credentials to attach to said wireless network (MN) and then to access said wireless network (MN).

2. Method according to claim 1, wherein in step (i) one also establishes a connection between said SIM-equipped device (MT) and said equipment (Ei), then said SIM-equipped device (MT) uses a software application, intended for acting as a gateway between said wireless network (MN) and said equipment (Ei), and in step (ii) said wireless network (MN) provides said equipment (Ei) with said credentials through said SIM-equipped device (MT) and under control of said software application.

3. Method according to claim 2, wherein in step (i) said wireless network (MN) provides said SIM-equipped device (MT) with said software application through said connection established between said SIM-equipped device (MT) and said wireless network (MN).

4. Method according to claim 2, wherein in step (i) said SIM-equipped device (MT) accesses to a server storing said software application in order to use the latter through said connection established between said SIM-equipped device (MT) and said wireless network (MN).

5. Method according to claim 1, wherein in step (i) once said connection has been established between said SIM-equipped device (MT) and said wireless network (MN), said user provides information representative of said equipment (Ei) to a dedicated service of said wireless network (MN), then said dedicated service provides said credentials to said SIM-equipped device (MT), and in step (ii) said user provides said received credentials to said equipment (Ei).

6. Method according to claim 5, wherein in step (i) said user also provides information representative of an allowed network use for his equipment (Ei).

7. Method according to one of claims 5 and 6, wherein in step (i) said user also request to be notified of a consumption of his equipment (E1) onto his SIM-equipped device (MT).

8. Method according to one of claims 5 to 7, wherein in step (ii) said user provides said received credentials to said equipment (Ei) by means of a user interface of said equipment (Ei).

9. Method according to one of claims 5 to 7, wherein in step (ii) said user establishes a connection between said SIM-equipped device (MT) and said equipment (Ei), and then provides said received credentials to said equipment (Ei) by means of his SIM-equipped device (MT) and through said connection.

10. Method according to one of claims 5 to 9, wherein in step (ii), once said equipment (Ei) has been attached to said wireless network (MN), the latter (MN) transmits a message describing said attachment to said SIM-equipped device (MT) so that its user checks if said attachment is correct and in the affirmative uses his SIM-equipped device (MT) to transmit a response to said wireless network (MN) to allow said attached equipment (Ei) to access said wireless network (MN).

11. Method according to one of claims 1 to 10, wherein said credentials comprise data chosen in a group comprising at least SIM/AKA keys, an EAP-TLS certificate, a X509 certificate, a login and a password, a Wi-Fi WEP, WPA keys, and W PA2 keys.

12. Device (D) for allowing an equipment (Ei) comprising a wireless communication module (CNM) and belonging to a user to access a wireless network (MN) to which a SIM-equipped device (MT) of said user has access thanks to a mobile data subscription, said device (D) comprising a control means (CM) arranged, when a connection has been established between said SIM-equipped device (MT) and a chosen server (SS) of said wireless network (MN), for delivering credentials intended for attaching said equipment (Ei) to said wireless network (MN) and for ordering said chosen server (SS) to transmit said credentials to said SIM-equipped device (MT), so that they could be used by said equipment (Ei) to attach to said wireless network (MN) and then to access said wireless network (MN).

13. Device according to claim 12, wherein said control means (CM) is arranged for allowing said SIM-equipped device (MT) to access a software application, intended for acting as a gateway between said wireless network (MN) and said equipment (Ei) after it has been connected to said SIM-equipped device (MT), through said connection established between said SIM-equipped device (MT) and said server (SS), and then for providing said equipment (Ei) with said credentials through said SIM-equipped device (MT) and under control of said software application.

14. Device according to claim 12, wherein said control means (CM) is arranged for delivering said credentials after said server (SS) has received information representative of said equipment (Ei) from said SIM-equipped device (MT), in order they could be transmitted to said SIM-equipped device (MT) by said server (SS), and then provided to said equipment (Ei) by said user.

15. Server (SS) intended for equipping a wireless network (MN), wherein it comprises a device (D) according to one of claims 11 to 14.
